# EUROPÄISCHE PATENTSCHRIFT

(11) **EP 1 330 493 B1**
(45) Veröffentlichungstag und Bekanntmachung des Hinweises auf die Patenterteilung: **11.01.2006**
(21) Anmeldenummer: 01992740.9
(22) Anmeldetag: 22.10.2001
(51) Int. Cl.: C08L 33/12, C08L 25/12

(54) **PMMA-FORMMASSEN MIT VERBESSERTER KÄLTESCHLAGZÄHIGKEIT**
PMMA MOLDING MATERIALS EXHIBITING AN IMPROVED LOW-TEMPERATURE IMPACT RESISTANCE
MATIERE PLASTIQUES DE MOULAGE AU POLYMETHACRYLATE DE METHYLE

(30) Priorität: 31.10.2000 DE 10054051
(43) Veröffentlichungstag der Anmeldung: 30.07.2003
(73) Patentinhaber: Röhm GmbH & Co. KG, 64293 Darmstadt (DE)
(72) Erfinder: SCHULTES, Klaus, 65197 Wiesbaden (DE); WICKER, Michael, 64342 Seeheim-Jugenheim (DE); HÖSS, Werner, 63150 Heusenstamm (DE); ALBRECHT, Klaus, 55129 Mainz (DE); KRESS, Hans-Jürgen, 68782 Brühl (DE)
(86) Internationale Anmeldenummer: PCT/EP2001/012172
(87) Internationale Veröffentlichungsnummer: WO 2002/036682

(56) Entgegenhaltungen:
- EP-A- 0 584 363
- DATABASE WPI Section Ch, Week 199925 Derwent Publications Ltd., London, GB; Class A13, AN 1999-296593 XP002194758 & JP 11 100484 A (MITSUBISHI RAYON CO LTD) , 13. April 1999 (1999-04-13)
- PATENT ABSTRACTS OF JAPAN vol. 017, no. 131 (C-1036), 18. März 1993 (1993-03-18) & JP 04 306252 A (MITSUBISHI RAYON CO LTD), 29. Oktober 1992 (1992-10-29)

## Beschreibung

### Technisches Gebiet der Erfindung

Die Erfindung betrifft schlagzähe Polymethacrylat-Formmassen (PMMA-Formmassen) mit verbesserter Kälteschlagzähigekeit.

### Stand der Technik

Im allgemeinen werden bei PMMA Formmassen (FM) als Schlagzähmodifier Kern / Schale (K/S) - bzw. Kern / Schale / Schale (K/S1/S2) - Partikel (Partikelgröße 100 - 1 000 nm) verwendet, welche üblicherweise über Emulsionspolymerisation hergestellt werden. Bei einem K/S Aufbau besteht der Kern aus einer elastomeren Phase - in K/S1/S2 Partikel ist die elastomere Phase im allgemeinen die Schale, welche auf den Kern aufgepfropft wurde (S1). Neben den Emulsionspolymerisaten können auch Suspensionspolymerisate zum Einsatz kommen. Hier liegt die elastomere Phase mit beispielsweise MMA gepfropft relativ fein verteilt in den Perlen (Matrixmaterial - z. B. PMMA) vor.

Die elastomere Phase besteht meist aus vernetztem Copolymerisat, welches zum größten Teil mit Hilfe von Butylacrylat hergestellt wird. Als elastomere Phase wird aber auch z. B. Polybutadien eingesetzt.

Schlagzähmodifier, welche Silikonkautschuk beinhalten, werden in der Literatur beschrieben.

Beim Aufbau der Pfropfcopolymere kann man grob zwischen K/S - und K/S1/S2 - Teilchen unterscheiden. Die K/S - Partikel sind gepfropfte Silikonteilchen - als Pfropfmonomere werden u. a. MMA, Styrol und Acrylnitril verwendet. Eine Besonderheit stellen K/S - Partikel dar, bei denen der Kern aus einer Silikon-und Acrylkautschuk - Mischung (keine Pfropfung) besteht (u. a. EP 430 134). K/S1/S2 - Teilchen sind u. a. in DE 3 617 267, DE 3 720 475, DE 3 801 537, DE 3 822 667, DE 3 839 587, DE 4 040 986, DE 4 342 048 und EP 433 906 beschrieben. Hierbei handelt es sich meist um folgenden Aufbau: K - Silikon /S1 - Acrylkautschuk oder weitere Silikonschicht / S2 - verschiedene Copolymere (zur Anbindung an die Matrix). Bei den K/S1/S2 - Teilchen in den DE 3 720 475 besteht der Kern aus einem Vinylkautschuk, S1 aus Silikonkautschuk und S2 aus verschiedenen Copolymeren.

Die hergestellten Pfropfcopolymerisate werden als Schlagzähmodifier für bestimmte Kunststoffe - (oft PC, SAN, Polystyrol) oder Polymerblends eingesetzt.

**EP 430 134:** Hier wird ein Kern, bestehend aus einem Silikongummi und einem Acrylkautschuk (diese verschlauften Kautschuke werden durch Einquellen und anschließender Polymerisation von Acrylatderivaten in den Silikonlatex hergestellt) mit Vinylmonomeren gepfropft. Ferner wird das Material zur Schlagzäh-Modifizierung von Formmassen beschrieben - allerdings werden hier nur Polycarbonat (PC) und/oder Polyester Formmassen genannt.

**US 4,690,986:** Hier wird eine schlagzähe Formmasse (sz) beansprucht, die auf Basis eines Pfropfcopolymerisats (über Emulsionspolymerisation) hergestellt wird. Das Pfropfcopolymerisat ist ein K/S - Produkt. Der Kern besteht u. a. aus einem Vernetzungsmittel (Siloxan mit Methacrylatgruppe über mehrere CH2 - Gruppen verbunden) und tetrafunktionellem Silan als Vernetzungsmittel. Beschrieben wird sowohl die Formmasse (sz) an sich als auch das Herstellungsverfahren hierzu.

**JP 612,135,462:** Hier wird eine Formmasse (sz) beansprucht, die auf Basis eines Pfropfcopolymerisats (über Emulsionspolymerisation) hergestellt wird. Das Pfropfcopolymerisat besteht aus mit Vinylmonomeren gepfropftem Siloxan.

**EP 308 198:** Hier wird eine Formmasse aus PMMI und gepfropftem Polysiloxan beansprucht. Das gepfropfte Polysiloxan wird durch Pfropfung von Monomeren und mindestens einem "Pfropf - Vernetzungsmittel" hergestellt. In den Unteransprüchen wird deutlich, dass es sich bei dem Pfropf - Vernetzungsmittel um das Vernetzungsmittel (Siloxan mit Methacrylatgruppe über mehrere CH₂ - Gruppen verbunden) in US 4,690,986 handelt. Auch wird in den Unteransprüchen das tetrafunktionelle Silan als Vernetzungsmittel erwähnt.

**EP 332 188:** Hier wird ein ähnliches Pfropfcopolymerisat wie in EP 430134 zur Modifizierung von FM verwendet. Im Beispiel werden Partikel mit Styrol gepfropft und diese zur Modifizierung von einem Polyether / Polysulfon - Blend eingesetzt.

**DE 4 342 048:** Hier wird ein Pfropfcopolymerisat als K/S1/S2 - Teilchen beansprucht. Als Kern fungiert ein Silikonkautschuk - S1 wird überwiegend aus Acrylaten (min. 70 %) hergestellt - die Monomere für S2 sind sehr weit gefasst (z. B. 50-100 % Methylmethacrylat). In den Unteransprüchen sind auch sz - FM basierend auf dem beanspruchten Pfropfcopolymerisat beschrieben - das Polymer für die Matrix ist auch hier sehr weit gefasst.

**DE 3839287:** Hier wird eine FM beansprucht, die zu 20-80 % aus herkömmlichen Polymeren und zu 80-20 % aus Pfropfcopolymerisaten besteht. Das Pfropfcopolymerisat besteht aus K/S1/S2 - Teilchen, wobei der Kern aus Silikonkautschuk und S1 aus Acrylatkautschuk aufgebaut ist. S2 wird durch Redox - Polymerisation (Emulsion) von verschiedensten Monomeren hergestellt. Als Beispiel wird nur eine sz - modifizierte SAN-Formmasse aufgeführt.

**WO 99/41315:** Hier wird eine Dispersion beansprucht, die eine Mischung von Partikeln bestehend aus Vinylcopolymeren und bestehend aus mit PMMA umhüllten Silikonkautschuk beinhaltet. Diese Dispersion kann u.a. als Schlagzähmodifier eingesetzt werden.

### Aufgabe und Lösung

Schlagzähe Formmassen (sz-FM) auf PMMA Basis werden im großen Umfang hergestellt. Eine erhöhte Schlagzähigkeit der Formmassen wird durch den Einsatz sogenannter Schlagzähmodifier erreicht. Diese Modifier werden in die entsprechenden PMMA Standardformmassen eincompoundiert.
Mit Hilfe der gebräuchlichen Modifier, welche Butylacrylat - Kautschuk als elastomere Phase enthalten, werden akzeptable Schlagzähigkeiten bis -10 °C in PMMA FM erreicht. Um akzeptable Schlagzähigkeiten bei noch tieferen Temperaturen zu erreichen, muss als elastomere Phase ein anderer Kautschuk (mit niedrigerer Glasübergangstemperatur (T_{g}) als Butylacrylat - Kautschuk) verwendet werden. Zum Einsatz kommt hier z. B. Polybutadien als elastomere Phase. Diese Modifier auf Basis von Polybutadien wirken sich sehr nachteilig auf die Witterungsbeständigkeit der hiermit hergestellten Formmassen aus.

Es sollte nun ein Modifier gefunden werden, mit dem eine akzeptable Schlagzähigkeit der PMMA Formmassen bzw. der PMMAISAN-Blends bei tieferen Temperaturen (< - 10°C) erreicht wird und die Witterungsbeständigkeit der Formmasse bzw. Blend im Vergleich zu den mit Modifiern auf Basis von Polybutadien hergestellten PMMA Formmassen bzw. PMMA/SAN-Blends verbessert ist. Gleichzeitig dürfen aber Schmelzviskosität, Strangaufweitung, Wärmeformbeständigkeitstemperatur bzw. Vicat-Erweichungstemperatur der entsprechenden Formmassen nicht durch den Einsatz der neuen Modifier leiden. Diese und weiter, hier nicht explizit genannten Aufgaben werden durch eine Zusammensetzung gemäß der Patentansprüche gelöst.

Die so modifizierten Formmassen sollen zur Herstellung von Gebrauchsgegenständen verwendet werden, die auch bei tieferen Temperaturen (bis - 40 °C) schlagzäh bleiben müssen. Diese Gebrauchsgegenstände sollen sowohl für Innen- als auch Außenanwendungen geeignet sein. Beispielhafte Anwendungen hierzu sind: Formkörper für die Automobilindustrie (z. B. Spiegelgehäuse und Spoiler), für den Bau (z. B. eingefärbte Rohre und Abdeckungen) und für die Haushaltsindustrie (z. B. Kühlschränke).

EP 492 376 beansprucht ein Pfropfcopolymerisat (und auch das Verfahren zur Herstellung dieses Pfropfcopolymerisats), das aus K/S bzw. KIS1/S2 Partikeln besteht. Der Kern und die optionale Zwischenschale bestehen aus Silikonkautschuk und sind genauer definiert - die äußere Schale wird durch Emulsionspolymerisation verschiedenster Monomere (ohne weiteren Emulgator) hergestellt. Die Teilchengröße ist auf 10 -300 nm eingeschränkt - der Polydispersitätsindex beträgt maximal 0,2. In den Beispielen wird das beanspruchte Pfropfcopolymerisat u.a. mit PMMA abgemischt und die KSZ bei 23 °C gemessen.

Die Herstellung des Produkts SLM 44 59 06 ist in EP 492 376 beschrieben, die Herstellung des Produkts SLM 44 50 06 ist in EP 492 376 beschrieben. Der Unterschied zwischen den Produkten besteht in der Aufarbeitung der Produkte. Alle Produkte sind bei der Wacker-Chemie GmbH erhältlich.

Der Kern a) bestehend aus einem siliciumorganischen Polymer und einer organopolymeren Hülle c) oder zwei Hüllen b) und c) wobei die innere Hülle b) aus einem siliciumorganischen Polymer besteht, dadurch gekennzeichnet, daß das Copolymerisat zusammengesetzt ist aus
a) 0,05 bis 95 Gew.-%, bezogen auf das Gesamtgewicht des Copolymerisats, eines Kernpolymeren der allgemeinen Formel (R₂SiO_{2/2})ₓ • (SiO_{4/2})_{z} mit x = 0 bis 99,5 Mol-%, y = 0,5 bis 100 Mol-%, z = 0 bis 50 Mol-%,
b) 0 bis 94,5 Gew.-%, bezogen auf das Gesamtgewicht des Copolymerisats, einer Polydialkylsiloxan-Hülle aus (R₂SiO_{2/2})-Einheiten und
c) 5 bis 95 Gew.-%, bezogen auf das Gesamtgewicht des Copolymerisats, einer Hülle aus Organopolymer monoolefinisch ungesättigter Monomere, wobei R gleiche oder verschiedene Alkyl- oder Alkenyl-Reste mit 1 bis 6 C-Atomen, Aryl-Reste oder substituierte Kohlenwasserstoffreste bedeutet, und die Teilchen eine Teilchengröße von 10 bis 300 nm und eine monomodale Teilchengrößenverteilung mit einem Polydispersitätsindex von maximal 0,2 haben.

EP 492 376 beschreibt die Herstellung der Siliconpfropfcopolymerisate und beschreibt deren Anwendung zur Schlagzähmodifizierung von Polyvinylchlorid (PVC), PMMA, Polystyrol (PS) und Styrol-Acrylnitril-Copolymer (SAN).

Die Kerbschlagzähigkeit wurde bei PMMA-Mischungen nur bei 23 °C Celsius bestimmt, Hinweise auf die Verwendbarkeit oder gar auf besondere Effekte bei tieferen Temperaturen fehlen völlig.

### BEISPIELE:

Abmischung der Formmassen
Eine Standardformmasse auf PMMA - Basis, PLEXIGLAS® 7 N (Hersteller: Röhm GmbH), wird mit verschiedenen Mengen an unterschiedlichen Silikonmodifiern von Wacker mittels Extruder abgemischt. Die Zusammensetzungen der einzelnen Beispiele sind in Anlage 1 dokumentiert.

Silikonmodifier:
A.) Core-Shell Modifier SLM 445906, Fa. Wacker, D:
Gefälltes Emulsionspolymerisat, bestehend aus Siliconelastomerpartikel mit PMMA - Hülle. Das Material ist weitgehend frei von Emulgatoren. Herstellung beschrieben in EP 492 376). Teilchengröße ca. 100 nm, Verteilung monomodal.
B.) Core-Shell Modifier SLM 445006, Fa. Wacker, D:
Sprühgetrocknetes Emulsionspolymerisat, bestehend aus Siliconelastomerpartikel mit PMMA - Hülle. Herstellung beschrieben in EP 492 376. Teilchengröße ca. 100 nm, Verteilung monomodal.
Als Vergleich dienen zwei schlagzäh ausgerüstete Formmassen. Tabelle der Abmischungen

| | Matrix | Modifier C |
|---|---|---|
| Abmischung A | Plexiglas 7N | |
| | 80,3 Gew.% | 19,7 Gew.-% |
| Abmischung B | Plexiglas 7N: | |
| | 63,3 Gew.-% | 36,7 Gew.-% |

(Vergleichsbeispiele)
C.) Acrylkautschuk - Modifier, Fa. Röhm
Zusammensetzung:
- Kern:: Copolymerisat aus Methylmethacrylat (95,7 Gew.-%), Ethylacrylat (4 Gew.-%) und Allylmethacrylat (0,3 Gew.-%)
- S1:: Copolymerisat aus Butylacrylat (81,2 Gew.-%), Styrol (17,5 Gew.-%) und Allylmethacrylat (1,3 Gew.-%)
- S2:: Copolymerisat aus Methylmethacrylat (96 Gew.-%) und Ethylacrylat (4 Gew.-%)
Massenverhältnis K/S1/S2:23/47/30

Die Herstellung des Modifiers basiert auf dem Verfahren wie es in der DE 33 00 526 offenbart ist.

### Prüfung der Formmassen

Aus den abgemischten Formmassen wurden Prüfkörper hergestellt. Die Formmassen bzw. die entsprechenden Prüfkörper wurden nach folgenden Methoden geprüft:
- Viskosität ηₛ (220°C/5MPa):: Bestimmung der Schmelzviskosität, Prüfnorm: DIN 54811: (1984)
- Strangaufweitung B:: Bestimmung der Strangaufweitung, Prüfnorm: DIN 54811: (1984)
- MVR (230°C/3,8kg):: Bestimmung des Volumen-Fließindex, Prüfnorm ISO 1133: (1997)
- Vicat-Erweichungstemperatur (16h/80°C):: Bestimmung der VicatErweichungstemperatur Prüfnorm ISO 306 (Methode B50): (1994)
- HDT (16h/80°C A 1,8MPa):: Bestimmung der Formbeständigkeitstemperatur, Prüfnorm: ISO 75 (Sept. 1993)
- KSZ (Izod 180/1 eA):: Bestimmung der Izod-Kerbschlagzähigkeit, Prüfnorm: ISO 180: (1993)
- E-Modul .: Bestimmung des E-Moduls, Prüfnorm: ISO 527-2
- Zugfestigkeit: Bestimmung der Zugfestigkeit, Prüfnorm: ISO 527-2
- Streckspannung: Bestimmung der Streckspannung, Prüfnorm: ISO 527-2
- nom. Bruchdehnung: Bestimmung der nominellen Bruchdehnung, Prüfnorm: ISO 527-2

Die Ergebnisse der Prüfungen sind in Anlage 2 zu sehen.
Man erkennt eindeutig die Vorteile der mit Silikonmodifier abgemischten Formmassen gegenüber den herkömmlich schlagzähmodifizierten Formmassen
(Abmischung A und B):

Bei vergleichbarem Gehalt an Schlagzähmodifiern (Vergleichsbeispiel 1 - Beispiel 3 - Beispiel 5) liegt die Kerbschlagzähigkeit der einzelnen Formmassen bei 23 °C auf gleichen Niveau - bei -20 °C ist die Kerbschlagzähigkeit bei den mit Silikonmodifier abgemischten Formmassen deutlich höher (besser).
Gleichzeitig bleiben Schmelzviskosität, Strangaufweitung, Formbeständigkeitstemperatur bzw. Vicat-Erweichungstemperatur bei allen verglichenen Formmassen auf dem selben Niveau.

Durch den relativ geringen Zusatz (10,5 Gew.-%) von Silikonmodifier in eine herkömmlich schlagzähmodifizierte Formmasse (Beispiel 1) lässt sich die Kerbschlagzähigkeit deutlich steigern und erreicht bei 23 °C das Niveau der Abmischung B (Vergleichsbeispiel 2), welche einen deutlich höheren Modifiergehalt besitzt. Bei -20 °C ist die Kerbschlagzähigkeit bei der mit Silikonmodifier abgemischten Formmasse deutlich höher (besser). Auch zeigt sich, dass im Vergleich zu Abmischung B die Vicat-Erweichungstemperatur bzw. Formbeständigkeitstemperatur bei der mit Silikonmodifier abgemischten Formmassen höher (besser) und Schmelzviskositäten und Strangaufweitungen auf vergleichbaren Niveau liegen.

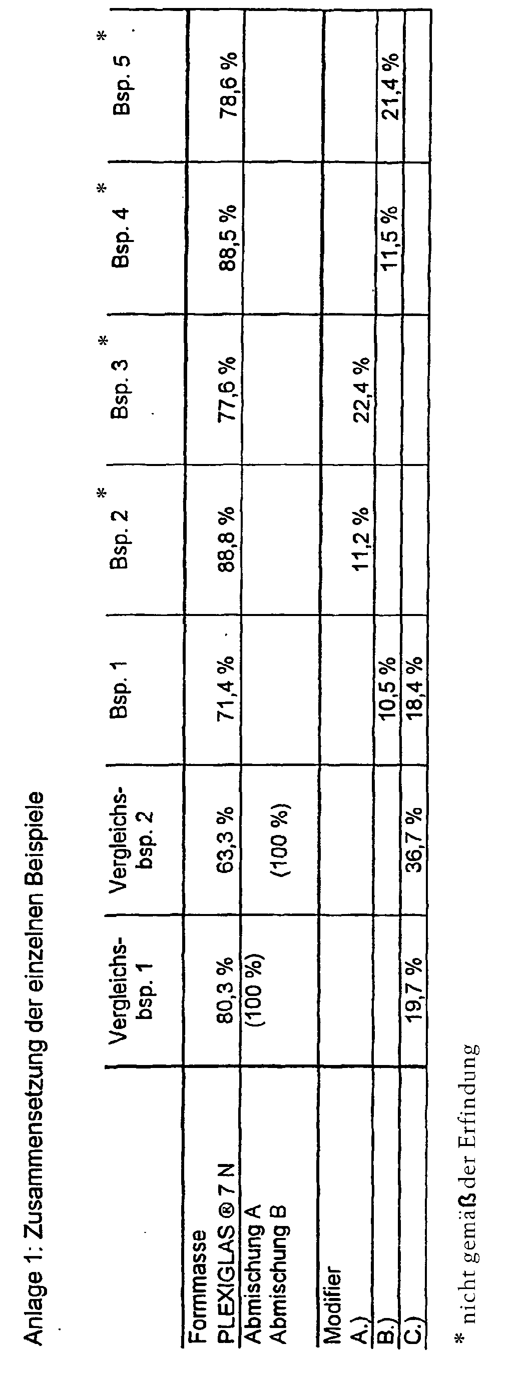

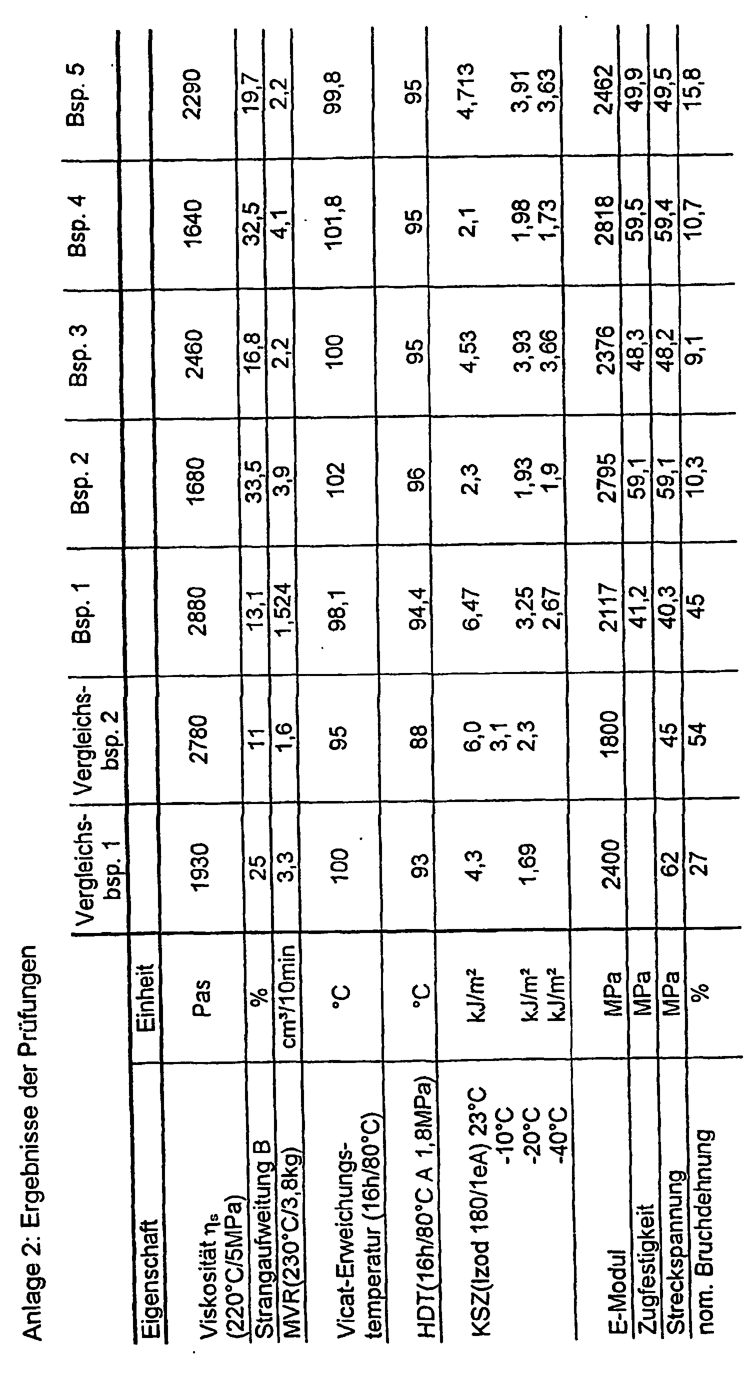

## Patentansprüche

1. Schlagzähe PMMA-Formmasse bestehend aus
a) einer Matrix aus
- midestens 75 Gew.-% Methylmethacrylat
- 0,1 - 15 Gew.-% Acrylat und
- 0 - 15 Gew.-% sonstige copolymerisierbare Verbindungen und
b) einer weiteren Matrix aus
- 70 - 92 Gew.-% Styrol
- 8 - 30 Gew.-% Acrylnitril
- 0 - 22 Gew.-% weiterer Comonomere
c) aus einem Schlagzähmodifier aus Siliconelastomerpartikeln mit PMMA-Hülle
und
d) aus einem Schlagzähmodifier basierend auf Acrylatkautschuk,
wobei die Gehalte, bezogen auf die Summe der Komponenten c) und d), 5-95 Gew.-% an c) und 95-5 Gew.-% an d) betragen und
wobei, bezogen auf die Summe a), b), c) und d) 0-45 Gew.-% der Komponente b), 5-30 Gew.-% der Komponente c) und 1-30 Gew.-% der Komponente d) zugesetzt werden und die Formmasse folgende Eigenschaften aufweist:
- eine Vicat - Erweichungstemperatur nach ISO 306 (B50) von mindestens 95 °C,
- eine Kerbschlagzähigkeit KSZ (Izod 180/1eA, 1,8 Mpa) nach ISO 180 von mindestens 3,0 kJ/m² bei -20 °C und von mindestens 2,5 kJ/m² bei -40°C,
- ein E-Modul nach ISO 527-2 von mindestens 2000 MPa

2. Schlagzähe PMMA Formmasse nach Anspruch 1,
**dadurch gekennzeichnet,**
**dass** die Matrix ein mittleres Molgewicht (Gewichtsmittel) von 90.000 - 250.000 Dalton besitzt.

3. Schlagzähe PMMA-Formmasse nach Anspruch 1,
**dadurch gekennzeichnet, dass**
der Schlagzähmodifier c) einem Silicon-Anteil von bis zu 95 Gew.-% hat.

4. Schlagzähe PMMA-Formmasse nach Anspruch 1,
**dadurch gekennzeichnet, dass**
die PMMA-Hülle des Schlagzähmodifier c) aus dem Polymerisat von 30 - 100 Gew.-% Methylmethacrylat und 0 - 30 Gew.-% sonstiger copolymerisierbaren Verbindungen besteht.

5. Schlagzähe PMMA-Formmasse nach Anspruch 1,
**dadurch gekennzeichnet, dass**
die Teilchengröße der Primärpartikel des Schlagzähmodifier c) im Durchmesser 10 - 300 nm beträgt und deren Teilchengrößenverteilung monomodal (Polydispersitätsindex maximal 0,2) ist.

6. Schlagzähe PMMA-Formmasse nach Anspruch 1,
**dadurch gekennzeichnet, dass**
der Schlagzähmodifier d) entweder aus
- Kern / Schale Partikel (Kern besteht aus Acrylatkautschuk - Partikelgröße 100 - 1 000 nm), oder
- Kern / Schale / Schale (K/S1/S2) - Partikel (S1 besteht aus Acrylatkautschuk - Partikelgröße 100 - 1 000 nm) oder
- fein verteiltern Acrylatkautschuk in PMMA Perlen (Partikelgröße 100 - 500 µm)
besteht.

7. Verwendung der Formmasse nach einem der vorstehenden Ansprüche zur Herstellung von Formkörpern durch Spritzguß oder Extrusion, die auch bei Temperaturen bis - 40 °C eine Kerbschlagzähigkeit KSZ (Izod 180/1eA, 1,8 MPa) nach ISO 180 von mindestens 2,5 kJ/m² haben.

8. Verwendung der Formkörper nach Anspruch 7 in Anwendungen die zeitweise Temperaturen unterhalb von -10 °C ausgesetzt sind.

9. Verwendung der Formkörper nach Anspruch 8,
**dadurch gekennzeichnet, dass**
der Formkörper ein Spiegelgehäuse eines Fahrzeugs oder ein Spoiler ist.

10. Verwendung der Formkörper nach Anspruch 8,
**dadurch gekennzeichnet, dass**
der Formkörper ein Rohr oder eine Abdeckung ist.

11. Verwendung der Formkörper nach Anspruch 8.
**dadurch gekennzeichnet, dass**
der Formkörper ein Bauelement eines Kühlschranks ist

## Claims

1. Impact-resistant PMMA moulding compound consisting of
a) a matrix composed of
- at least 75 wt% of methyl methacrylate
- 0.1 to 15 wt% of acrylate and
- 0 to 15 wt.% of other copolymerisable compounds and
b) a further matrix composed of
- 70 to 92 wt% of styrene
- 8 to 30 wt.% of acrylonitrile
- 0 to 22 wt.% of other comonomers
c) an impact-resistance modifier composed of silicone elastomer particles with a PMMA shell
and
d) an impact-resistance modifier based on acrylate rubber,
wherein the content of c) is from 5 to 95 wt.% and the content of d) is from 95 to 5 wt.%, based on the sum of the contents of c) and d), and
wherein, based on the sum of a), b), c) and d), 0 to 45 wt.% of component b), 5 to 30 wt.% of component c) and 1 to 30 wt.% of component d) are added, and the moulding compound has the following properties:
- a Vicat softening point to ISO 306 (B50) of at least 95 °C,
- a notched impact strength NIS (Izod 180/1eA, 1.8 MPa) to ISO 180 of at least 3.0 kJ/m² at -20 °C, and of at least 2.5 kJ/m² at -40 °C,
- an E-modulus to ISO 527-2 of at least 2000 MPa.

2. Impact-resistant PMMA moulding compound according to Claim 1,
**characterised in that** the matrix has a mean molecular weight (average weight) of 90 000 to 250 000 daltons.

3. Impact-resistant PMMA moulding compound according to Claim 1,
**characterised in that** impact-resistance modifier c) has a silicon fraction of up to 95 wt.%

4. Impact-resistant PMMA moulding compound according to Claim 1,
**characterised in that** the PMMA shell of impact-resistance modifier c) consists of the polymerisate of 30 to 100 wt.% of methyl methacrylate and 0 to 30 wt.% of other copolymerisable compounds.

5. Impact-resistant PMMA moulding compound according to Claim 1,
**characterised in that** the primary particle size of impact-resistance modifier c) is 10 to 300 nm in diameter and the particle-size distribution of the primary particles is monomodal (polydispersity index max. 0.2).

6. Impact-resistant PMMA moulding compound according to Claim 1,
**characterised in that** impact-resistance modifier d) consists either of
- core / shell particles (core consisting of acrylate rubber - particle size 100 to 1000 nm) or
- core / shell / shell (c/s1/s2) particles (s1 consisting of acrylate rubber - particle size 100 to 1000 nm) or
- finely divided acrylate rubber in PMMA beads (particle size 100 to 500 µm).

7. Use of the moulding compound according to any one of the preceding claims for producing moulded bodies by injection moulding or extrusion which, even at temperatures to -40 °C, have a notched impact strength NIS (Izod 180/1eA, 1.8 MPa) to ISO 180 of at least 2.5 kJ/m².

8. Use of the moulded body according to Claim 7 in applications which are periodically exposed to temperatures below -10 °C.

9. Use of the moulded body according to Claim 8,
**characterised in that** the moulded body is a mirror housing of a vehicle, or a spoiler.

10. Use of the moulded body according to Claim 8,
**characterised in that** the moulded body is a tube or a covering.

11. Use of the moulded body according to Claim 8,
**characterised in that** the moulded body is a structural member of a refrigerator.

## Revendications

1. Matière à mouler PMMA résistante aux chocs, constituée
a) d'une matrice constituée de
- 75 à 99,9 % en poids de méthacrylate de méthyle
- 0,1 à 15 % en poids d'acrylate et
- 0 à 15 % en poids de divers composés copolymérisables et
b) d'une autre matrice constituée de
- 70 à 92 % en poids de styrène
- 8 à 30 % en poids d'acrylonitrile
- 0 à 22 % en poids d'autres comonomères
c) d'un modificateur de la résistance au choc constitué de particules d'élastomère silicone comportant une enveloppe PMMA
et
d) d'un modificateur de la résistance au choc à base de caoutchouc acrylate,
les teneurs, par rapport à la somme des composants c) et d), étant de 5 à 95 % en poids de c) et de 95 à 5 % en poids de d) et
par rapport à la somme a), b), c) et d), 0 à 45 % en poids de composant b), 5 à 30 % en poids de composant c) et 1 à 30 % de composant d) étant ajoutés et la matière à mouler ayant les propriétés suivantes :
- un point de ramollissement Vicat selon la norme ISO 306 (B50) d'au moins 95°C,
- une résilience avec entaille (Izod 180/1eA, 1,8 Mpa) selon la norme ISO 180, d'au moins 3,0 kJ/m² à -20°C et d'au moins 2,5 kJ/m² à - 40°C,
- un module d'élasticité selon la norme ISO 527-2 d'au moins 2 000 MPa.

2. Matière à mouler PMMA résistante aux chocs selon la revendication 1,
**caractérisée en ce que**
la matrice a un poids moléculaire moyen (moyenne pondérale) de 90 000 à 250 000 Dalton.

3. Matière à mouler PMMA résistante aux chocs selon la revendication 1,
**caractérisée en ce que**
le modificateur de la résistance au choc c) a une fraction silicone pouvant atteindre 95 % en poids.

4. Matière à mouler PMMA résistante aux chocs selon la revendication 1,
**caractérisée en ce que**
l'enveloppe PMMA du modificateur de la résistance au choc c) est constituée du polymère de 30 à 100 % en poids de méthacrylate de méthyle et de 0 à 30 % en poids d'autres composés copolymérisables.

5. Matière à mouler PMMA résistante aux chocs selon la revendication 1,
**caractérisée en ce que**
le diamètre des particules primaires du modificateur de la résistance au choc c) mesure de 10 à 300 nm et leur distribution granulométrique est monomodale (indice de polydispersité maximale de 0,2).

6. Matière à mouler PMMA résistante aux chocs selon la revendication 1,
**caractérisée en ce que**
le modificateur de la résistance au choc d) est constitué
- soit de particules noyau / coque (le noyau est constitué de particules de caoutchouc acrylate mesurant 100 à 1 000 nm)
- soit de particules (K.S1/S2) noyau / coque / coque (S1 est constitué de particules de caoutchouc acrylate mesurant 100 à 1 000 nm)
- soit de caoutchouc acrylate finement dispersé dans des perles de PMMA (particules mesurant 100 à 500 µm).

7. Utilisation de la matière à mouler selon l'une quelconque des revendications précédentes pour fabriquer des corps moulés par injection ou extrusion qui ont une résilience avec entaille (Izod 180/ leA, 1,8 MPa) selon la norme ISO 180 d'au moins 2,5 kJ/m² même à des températures pouvant aller jusqu'à -40°C.

8. Utilisation des corps moulés selon la revendication 7 dans des applications soumises temporairement à des températures inférieures à - 10°C.

9. Utilisation des corps moulés selon la revendication 8,
**caractérisée en ce que**
le corps moulé est un boîtier de rétroviseur d'un véhicule ou d'un spoiler.

10. Utilisation des corps moulés selon la revendication 8,
**caractérisée en ce que**
le corps moulé est un tube ou un capot.

11. Utilisation des corps moulés selon la revendication 8,
**caractérisée en ce que**
le corps moulé est un composant d'un réfrigérateur.
